# EUROPEAN PATENT SPECIFICATION

(11) **EP 1 169 688 B1**
(45) Date of publication and mention of the grant of the patent: **08.01.2003**
(21) Application number: 00922588.9
(22) Date of filing: 31.03.2000
(51) Int. Cl.: G08B 13/14

(54) **APPARATUS AND METHOD FOR AUTOMATIC LOCATION-DEPENDENT DISABLEMENT**
VERFAHREN UND VORRICHTUNG ZUR AUTOMATISCHEN STANDORTSABHÄNGIGEN AUSSERBETRIEBSETZUNG
PROCEDE ET APPAREIL POUR UNE MISE HORS FONCTION AUTOMATIQUE SELON UN EMPLACEMENT

(30) Priority: 01.04.1999 GB 9907530
(43) Date of publication of application: 09.01.2002
(73) Proprietor: Motorola Limited, Basingstoke, Hampshire RG22 4PD (GB)
(72) Inventor: SIMCOCK, John Bryan Albert, Fleet, Hampshire GU13 8EZ (GB); WRIGHT, Christopher, Tadley Hampshire RG26 3PJ (US)
(74) Representative: Treleven, Colin
(86) International application number: EP0002886
(87) International publication number: WO00060556

(56) References cited:
- EP-A- 0 574 230
- EP-A- 0 869 462
- WO-A-96/03728
- DE-A- 19 641 435
- PATENT ABSTRACTS OF JAPAN vol. 1998, no. 04, 31 March 1998 (1998-03-31) & JP 09 322267 A (HITACHI BUILDING SYST CO LTD), 12 December 1997 (1997-12-12)

## Description

### Field of Invention

This invention relates to automatic disablement of a cellular telephone or a radio transmitter/receiver, dependent on device location.

### Background of Invention

In distributing products across different geographic areas, it may be desirable for technical or regulatory reasons for a device such as a radio designed for use in one area not to be used in another area.

A variety of measures are known which attempt to inhibit "grey" marketing (the marketing in one area of a product intended for sale/use in another area). These measures include: regional type approval, regional model numbering, regional colouring, and regional naming/nomenclature. Unfortunately, even a combination of such measures does not eliminate the problem, but merely increases the difficulty for a "grey marketeer".

### Summary of Invention

In accordance with a first aspect of the present invention there is provided an apparatus as claimed in claim 1.

In accordance with a second aspect of the present invention there is provided a method as claimed in claim 6.

### Brief Description of Drawings

Embodiments of the invention will now be described with reference to the accompanying drawings, in which:
FIG. 1 shows in block diagrammatic form a system including a radio incorporating the present invention; and
FIG. 2 shows in block diagrammatic form a system including a cellular telephone incorporating the present invention.

### Description of Preferred Embodiment

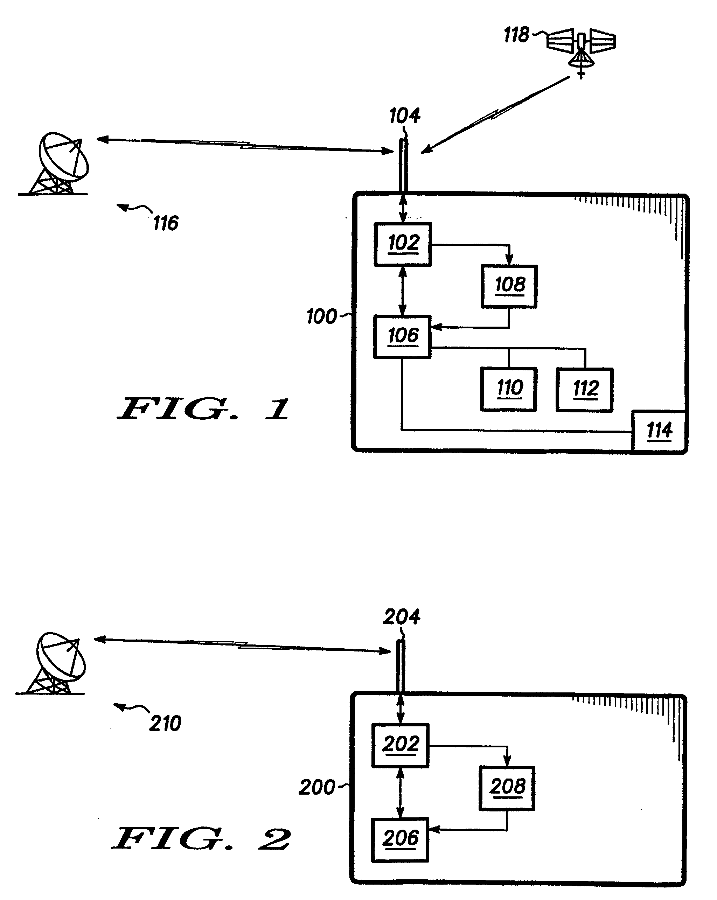

Referring firstly to FIG. 1, a two-way portable radio 100 includes transmit/receive circuitry 102 coupled to an antenna 104 and under the control of a microprocessor 106.

The radio 100 also includes a Global Positioning by Satellite system (GPS) receiver 108, also under the control of the microprocessor 106.

As will be explained further below, the radio also holds in integrated circuit memories 110, 112 data (for example a latitude and longitude setting) representing the desired operating area for the radio.

The radio 100 also has a 'code plug' 114, via which particular operating features of the radio (such as transmission/reception frequencies, power levels, etc.) are determined.

In use, the radio 100 communicates with a radio transmitter/receiver 116 and receives GPS data from GPS satellites, only one of which 118 is shown.

Whenever the radio 100 is powered up, it determines its geographic position from its GPS receiver 108. Stored within the radio, in some protected area of the memories 110 and 112, is one or more sets of latitude/longitude coordinates defining a geographic area within which the unit is permitted to operate. This latitude/longitude information is created at the manufacturing point. For added security, to prevent tampering, this information could be encrypted. It will be appreciated that by spreading the information across different integrated circuit memories the security of the information is enhanced, but that, if desired, the information could be held in a single IC device.

Before a dealer hands over a radio to a customer, the generic code plug data must be overwritten with the information on radio channels, operational features, etc., specific to that particular customer's requirements, which must be stored in the radio using Radio Service Software (RSS) or Dealer Programming Software (DPS) installed on a personal computer (PC). At this stage, the permitted operational area stored in the unit is compared, in the microprocessor 106, with the current geographical position, as determined by the GPS receiver 108, and if there is no match programming is inhibited and the product is rendered useless in that region.

Additionally, the radio could incorporate its own self-checking routine to monitor its position and shut itself down if it found a mismatch. A radio programmed legally in its permitted geographic area could not subsequently be taken elsewhere for use.

Referring now to FIG. 2, even though no form of dealer programming is required and cellular telephones are intended for roaming anyway, a similar concept can be applied to cellular telephones.

As shown in FIG. 2, a cellular telephone 200 includes transmit/receive circuitry 202 coupled to an antenna 204 and under the control of a microprocessor 206. The cellular telephone 200 also includes an integrated circuit memory 208 holding data (for example a latitude and longitude setting) representing the desired operating area for the cellular telephone. This desired positional data can be programmed into the memory during manufacture, or before a dealer hands over the cellular telephone to a customer.

In use, the cellular telephone 200 communicates with cellular base stations, only one of which 210 is shown.

Whenever the cellular telephone 200 is powered up, it determines its geographic position from data in the signals received from the base station 210. It compares, in the microprocessor 206, this received position data with the data held in the memory 208 representing the desired operating area for the cellular telephone, and if there is no match, then operation of the cellular telephone is disabled and the product is rendered useless.

Additionally, the cellular telephone could incorporate its own self-checking routine to monitor its position each time it establishes communication with a new base station and shut itself down if it found a mismatch. A cellular telephone programmed legally in its permitted geographic area could not subsequently be taken elsewhere for use.

Thus, a cellular telephone intended for use in the United Kingdom, for example, would contain the appropriate (U.K.) geographic data; if the phone were taken elsewhere in the world and registered for the first time on a compatible system, then the registration would fail and operation of the cellular telephone would be inhibited.

The security of this concept could be increased by randomising the registration attempt when the geographic check is performed, say some time within the first 50 calls, rather than the first time.

## Claims

1. A cellular telephone or a radio transmitter/ receiver having means for automatic location-dependent disablement comprising, within the cellular telephone or radio transmitter/ receiver:
means for holding information representative of the desired operational location of the cellular telephone or radio transmitter/ receiver;
means for sensing the location of the cellular telephone or radio transmitter/receiver; and
means for comparing the desired operational location of the cellular telephone or radio transmitter/ receiver with the sensed location of the cellular telephone or radio transmitter/ receiver, and for disabling the cellular telephone or radio transmitter/ receiver when there is a substantial difference therebetween.

2. A cellular telephone or radio transmitter/ receiver as claimed in claim 1, wherein the means for holding information comprises a plurality of integrated circuit memories across which the information representative of the desired operational location of the cellular telephone or radio transmitter/ receiver is held.

3. A cellular telephone or radio transmitter/ receiver as claimed in claim 1 or 2, wherein the means for holding information holds the information representative of the desired operational location of the cellular telephone or radio transmitter/ receiver in encrypted form.

4. A cellular telephone or radio transmitter/ receiver as claimed in claim 1, 2 or 3 wherein the means for sensing the location of the cellular telephone or radio transmitter/ receiver comprises a GPS receiver.

5. A cellular telephone as claimed in claim 1, 2 or 3 wherein the cellular telephone comprises means for sensing the location of the cellular telephone from data in received broadcast signals from a base station.

6. A method for automatically disabling a cellular telephone or a radio transmitter/ receiver, dependent upon the location of the cellular telephone or radio transmitter/ receiver, the method comprising the steps of:
storing in the cellular telephone or radio transmitter/ receiver information representative of the desired operational location of the cellular telephone or radio transmitter/ receiver;
sensing the location of the cellular telephone or radio transmitter/ receiver; and
disabling the cellular telephone or radio transmitter/ receiver when the desired operational location of the cellular telephone or radio transmitter/ receiver is substantially different from the sensed location of the cellular telephone or radio transmitter/ receiver.

7. A method as claimed in claim 6 wherein the step of storing information comprises storing across a plurality of integrated circuit memories the information representative of the desired operational location of the cellular telephone or radio transmitter/ receiver.

8. A method as claimed in claim 6 or 7 wherein the step of storing information comprises storing in encrypted form the information representative of the desired operational location of the cellular telephone or radio transmitter/ receiver.

9. A method as claimed in claim 6, 7 or 8 wherein the step of sensing the location of the apparatus comprises sensing the location of the cellular telephone or radio transmitter/ receiver via a GPS receiver.

10. A method as claimed in any of claims 6-8, wherein the step of sensing the location of the cellular telephone or radio transmitter/ receiver comprises sensing the location of the cellular telephone or radio transmitter/ receiver from data in received broadcast signals.

11. A method as claimed in any one of claims 5 to 10, wherein the step of sensing the location of the cellular telephone or radio transmitter/ receiver comprises sensing the location of the cellular telephone or radio transmitter/receiver at a random time following operation of the cellular telephone or radio transmitter/ receiver.

12. A method as claimed in any one of claims 5 to 11, wherein the steps of sensing the location of the cellular telephone or radio transmitter/ receiver, and of disabling the cellular telephone or radio transmitter/ receiver, occur during storing of customer-specific information in the cellular telephone or radio transmitter/ receiver.

## Patentansprüche

1. Zellulares Telefon oder Funk-Sender/Empfänger, die Mittel zum automatischen standortabhängigen Außerbetriebsetzen haben und innerhalb des zellularen Telefons oder Funk-Senders/Empfängers umfassen:
Mittel zum Halten von Informationen, die den gewünschten Betriebsort des zellularen Telefons oder Funk-Senders/Empfängers darstellen;
Mittel zum Erfassen des Standortes des zellularen Telefons oder Funk-Senders/Empfängers; und
Mittel zum Vergleichen des gewünschten Betriebsortes des zellularen Telefons oder Funk-Senders/Empfängers mit dem erfassten Standort des zellularen Telefons oder Funk-Senders/Empfängers und zum Außerbetriebsetzen des zellularen Telefons oder Funk-Senders/Empfängers, wenn es dazwischen einen wesentlichen Unterschied gibt.

2. Zellulares Telefon oder Funk-Sender/Empfänger gemäß Anspruch 1, bei denen das Mittel zum Halten von Information eine Vielzahl von IC-Speichern umfasst, über die die Information, die den gewünschten Betriebsort des zellularen Telefons oder Funk-Senders/Empfängers darstellt, gehalten wird.

3. Zellulares Telefon oder Funk-Sender/Empfänger gemäß Anspruch 1 oder 2, bei denen das Mittel zum Halten von Information die Information, die den gewünschten Betriebsort des zellularen Telefons oder Funk-Senders/Empfängers darstellt, in verschlüsselter Form hält.

4. Zellulares Telefon oder Funk-Sender/Empfänger gemäß Anspruch 1, 2 oder 3, bei denen das Mittel zum Erfassen des Standortes des zellularen Telefons oder Funk-Senders/Empfängers einen GPS-Empfänger umfasst.

5. Zellulares Telefon gemäß Anspruch 1, 2 oder 3, bei dem das zellulare Telefon Mittel zum Erfassen des Standortes des zellularen Telefons von Daten in von einer Basisstation empfangenen Rundfunksignalen umfasst.

6. Verfahren zum automatischen Außerbetriebsetzen eines zellularen Telefons oder eines Funk-Senders/Empfängers in Abhängigkeit von dem Standort des zellularen Telefons oder Funk-Senders/Empfängers, wobei das Verfahren die folgenden Schritte umfasst:
Speichern von Information in dem zellularen Telefon oder Funk-Sender/Empfänger, die den gewünschten Betriebsort des zellularen Telefons oder Funk-Senders/Empfängers darstellen;
Erfassen des Standortes des zellularen Telefons oder Funk-Senders/Empfängers; und
Außerbetriebsetzen des zellularen Telefons oder Funk-Senders/Empfängers, wenn der gewünschte operationale Standort des zellularen Telefons oder Funk-Senders/Empfängers von dem abgetasteten Standort des zellularen Telefons oder Funk-Senders/Empfängers wesentlich verschieden ist.

7. Verfahren gemäß Anspruch 6, bei dem der Schritt des Speicherns von Information ein Speichern der Information, die den gewünschten Betriebsort des zellularen Telefons oder Funk-Senders/Empfängers darstellt, über eine Vielzahl von IC-Speichern umfasst.

8. Verfahren gemäß Anspruch 6 oder 7, bei dem der Schritt des Speicherns von Information Speichern der Information, die den gewünschten Betriebsort des zellularen Telefons oder Funk-Senders/Empfängers darstellt, in verschlüsselter Form umfasst.

9. Verfahren gemäß Anspruch 6, 7 oder 8, bei dem der Schritt des Erfassens des Standortes der Vorrichtung ein Erfassen des Standortes des zellularen Telefons oder Funk-Senders/Empfängers über einen GPS-Empfänger umfasst.

10. Verfahren gemäß einem beliebigen der Ansprüche 6-8, bei dem der Schritt des Erfassens des Standortes des zellularen Telefons oder Funk-Senders/Empfängers ein Erfassen des Standortes des zellularen Telefons oder Funk-Senders/Empfängers von Daten in empfangenen Rundfunksignalen umfasst.

11. Verfahren gemäß einem beliebigen der Ansprüche 5-10, bei dem der Schritt des Erfassens des Standortes des zellularen Telefons oder Funk-Senders/Empfängers ein Erfassen des Standortes des zellularen Telefons oder Funk-Senders/Empfängers zu einem zufälligen Zeitpunkt nach dem Betrieb des zellularen Telefons oder Funk-Senders/Empfängers umfasst.

12. Verfahren gemäß einem beliebigen der Ansprüche 5-11, bei dem die Schritte des Erfassens des Standortes des zellularen Telefons oder Funk-Senders/Empfängers und des Außerbetriebsetzens des zellularen Telefons oder Funk-Senders/Empfängers während des Speicherns kundenspezifischer Information in das zellulare Telefon oder den Funk-Sender/Empfänger in Kraft treten.

## Revendications

1. Téléphone cellulaire ou émetteur/récepteur radio comportant un moyen pour une invalidation automatique dépendant de la localisation, comprenant, à l'intérieur du téléphone cellulaire ou de l'émetteur/récepteur radio :
un moyen pour contenir une information qui est représentative de la localisation opérationnelle/de fonctionnement souhaitée du téléphone cellulaire ou de l'émetteur/récepteur radio ;
un moyen pour détecter la localisation du téléphone cellulaire ou de l'émetteur/récepteur radio ; et
un moyen pour comparer la localisation opérationnelle/de fonctionnement souhaitée du téléphone cellulaire ou de l'émetteur/récepteur radio avec la localisation détectée du téléphone cellulaire ou de l'émetteur/récepteur radio et pour invalider le téléphone cellulaire ou l'émetteur/récepteur radio lorsqu'il y a une différence substantielle entre elles.

2. Téléphone cellulaire ou émetteur/récepteur radio selon la revendication 1, dans lequel le moyen pour contenir l'information comprend une pluralité de mémoires sous forme de circuit intégré dans lesquelles l'information qui est représentative de la localisation opérationnelle/de fonctionnement souhaitée du téléphone cellulaire ou de l'émetteur/récepteur radio est contenue.

3. Téléphone cellulaire ou émetteur/récepteur radio selon la revendication 1 ou 2, dans lequel le moyen pour contenir l'information contient l'information qui est représentative de la localisation opérationnelle/de fonctionnement souhaitée du téléphone cellulaire ou de l'émetteur/récepteur radio sous forme cryptée.

4. Téléphone cellulaire ou émetteur/récepteur radio selon la revendication 1, 2 ou 3, dans lequel le moyen pour détecter la localisation du téléphone cellulaire ou de l'émetteur/récepteur radio comprend un récepteur GPS.

5. Téléphone cellulaire selon la revendication 1, 2 ou 3, dans lequel le téléphone cellulaire comprend un moyen pour détecter la localisation du téléphone cellulaire à partir de données dans des signaux de diffusion reçus en provenance d'une station de base.

6. Procédé permettant d'invalider de manière automatique un téléphone cellulaire ou un émetteur/récepteur radio en fonction de la localisation du téléphone cellulaire ou de l'émetteur/récepteur radio, le procédé comprenant les étapes de :
stockage, dans le téléphone cellulaire ou dans l'émetteur/récepteur radio, d'une information qui est représentative de la localisation opérationnelle/de fonctionnement souhaitée du téléphone cellulaire ou de l'émetteur/récepteur radio ;
détection de la localisation du téléphone cellulaire ou de l'émetteur/récepteur radio ; et
invalidation du téléphone cellulaire ou de l'émetteur/récepteur radio lorsque la localisation opérationnelle/de fonctionnement souhaitée du téléphone cellulaire ou de l'émetteur/récepteur radio est substantiellement différente de la localisation détectée du téléphone cellulaire ou de l'émetteur/récepteur radio.

7. Procédé selon la revendication 6, dans lequel l'étape de stockage d'information comprend le stockage, sur une pluralité de mémoires sous forme de circuit intégré, de l'information qui est représentative de la localisation opérationnelle/de fonctionnement souhaitée du téléphone cellulaire ou de l'émetteur/récepteur radio.

8. Procédé selon la revendication 6 ou 7, dans lequel l'étape de stockage d'information comprend le stockage sous forme cryptée de l'information qui est représentative de la localisation opérationnelle/de fonctionnement souhaitée du téléphone cellulaire ou de l'émetteur/récepteur radio.

9. Procédé selon la revendication 6, 7 ou 8, dans lequel l'étape de détection de la localisation de l'appareil comprend la détection de la localisation du téléphone cellulaire ou de l'émetteur/récepteur radio via un récepteur GPS.

10. Procédé selon l'une quelconque des revendications 6 à 8, dans lequel l'étape de détection de la localisation du téléphone cellulaire ou de l'émetteur/récepteur radio comprend la détection de la localisation du téléphone cellulaire ou de l'émetteur/récepteur radio à partir de données dans des signaux de diffusion reçus.

11. Procédé selon l'une quelconque des revendications 5 à 10, dans lequel l'étape de détection de la localisation du téléphone cellulaire ou de l'émefteur/récepteur radio comprend la détection de la localisation du téléphone cellulaire ou de l'émetteur/récepteur radio à un instant aléatoire suite à l'activation du téléphone cellulaire ou de l'émetteur/récepteur radio.

12. Procédé selon l'une quelconque des revendications 5 à 11, dans lequel les étapes de détection de la localisation du téléphone cellulaire ou de l'émetteur/récepteur radio et d'invalidation du téléphone cellulaire ou de l'émetteur/récepteur radio se produisent pendant le stockage d'une information spécifique pour le client dans le téléphone cellulaire ou dans l'émetteur/récepteur radio.
